# EUROPEAN PATENT APPLICATION

(11) **EP 2 455 564 A1**
(43) Date of publication of application: **23.05.2012**
(21) Application number: 11008335.9
(22) Date of filing: 17.10.2011
(51) Int. Cl.: E04G 25/08, F16B 7/14

(54) **Pressure-applying telescopic spacer**

(30) Priority: 23.11.2010 ES 201001534
(71) Applicant: Industrias Piqueras, S.A., 26006 Logrono (La Rioja) (ES)
(72) Inventor: Cerezo Lotina, Jose Luis, 26006 Logrono (La Rioja) (ES)
(74) Representative: Villamor Muguerza, Jon

(57) **Abstract**

The present invention relates to a pressure-applying telescopic spacer in which the improvements can be applied, being formed by two tubes (1 and 2) telescopically coupleable to one another with a manually operated blocking element between them, its ends having supports (7 and 8) on the elements to be space. The improvements consist of placing a spring (14) inside the telescopic tubes (1 and 2) which can be an expansion or compression spring in order to retract or elongate the telescopic tubes (1 and 2) automatically once the blocking element between them has been released with a single hand, whether the spacer itself is in the vertical, inclined, or horizontal position.

## Description

### OBJECT OF THE INVENTION

The present invention relates to improvements introduced in the object of the main Invention Patent P 200901925 relating to a pressure-applying telescopic spacer.

The object of the invention is to handle the spacer with a single hand to change its length, such variation being performed completely automatically.

### Background of the Invention

The main Invention Patent P 200901925 discloses a pressure-applying telescopic spacer constituting a manually operated tool for the purpose of establishing a distance and keeping it under tension or load either by supporting the ends in parallel planes or in perpendicular planes, or in planes forming an angle with one another, linear planes or others that may exist, such that the spacer can work both by pressure and by pulling on the elements or parts to be spaced, providing a wide range of distances for a single level of the spacer, being versatile, structurally simple, lightweight, with instinctive and easy handling.

Specifically, the spacer described in that main Invention Patent is formed from two tubes telescopically coupled to one another, with blocking means for blocking the axial movement between said tubes, and these blocking means being formed by sheet metal rings placed on top of one another forming a block, through which there passes the inner tube, and linked to a spring retained by a head belonging to a long sleeve assembled and fixed axially with respect to the outer tube, such that the rings are associated with a spring that tends to move the rings obliquely, i.e., in an inclined manner, so that they are wedged on the inner tube and establish the blocking between the two tubes of the spacer, where as if that spring is acted upon, the sheet metal rings tend to occupy a position perpendicular to the outer tube, enabling the axial movement of this tube with respect to the outer tube.

The spacer is furthermore complemented with two end supports which are formed by respective plates assembled pivotably on the ends of the tubes themselves, such plates being able to adopt any inclination, the plate of the end being considered the upper end corresponds to the inner tube connected to it through a threaded rod on a nut arranged inside the end of the tube, forming a pressure mechanism, such that in the rotation of the spacer assembly, the final distance of the spacer itself, or its pressure on the surfaces between which is its applied increases or decreases, depending on the rotation direction.

In turn, the plate of the end considered as the lower end is connected with a sleeve through a rod and a spring, determining an approximation mechanism which gives way when it is operated to reduce the dimension or length of the spacer, which mechanism is practical when slight pressure is required for the spacer to be fitted or to be maintained alone while performing other complementary adjustment work.

The possibility of adopting different inclinations of the plates enables placing the spacer not only between vertical levels, but also inclined and even horizontal levels, provided that such plates are fixed through holes with which they are provided to the surfaces between which the spacer is applied, which fixing will be on any type of surface.

The operation for deblocking the tubes forming the spacer must be performed with both hands, one for acting on the spring associated with the sheet metal rings as a blocking element per se, and the other hand for sliding one tube with respect to the other, and even if said operation could be performed with a single hand, it would be necessary for the spacer to be in a completely vertical position to allow the sliding of the inner tube on the outer tube by gravity.

### Description of the Invention

Based on the features of the main Invention Patent mentioned in the preceding section, the novelty of the invention, or better put the improvements that can be applied in that spacer of the main Invention Patent, are based on arranging an expansion spring located inside the tubes, being coupled at the upper end to the rod in which the support plate of the end corresponding to the inner tube is assembled, and the other end being supported in the element connecting the lower support plate corresponding to the end of the outer tube.

That spring can work under compression or under expansion, in the first case connected to the inner end of the rod connecting the upper support plate of the inner tube, and in the second case being housed or enveloping the upper end sector of the spring to the aforementioned rod, such that based on that inner spring, when the sheet metal rings forming the blocking element are operated, the spring in question will overcome the weight of the tubes telescopically coupled to one another, tending to the space them in the second case and to bring them closer to one another in the first case, and all that in a completely automatic manner, whatever the position of the spacer, i.e., it can be placed vertically, inclined, etc.

The spacer is thus handled with a single hand in order to reach the final measure completely automatically by simply operating the pack of rings forming the blocking device or element, with a single hand, such that when that blocking element is no longer operated, the dimension reached at that time is automatically self-fixed.

Based on those features, the pressure-applying telescopic spacer offers, in addition to the benefits mentioned above, i.e., being able to handle it with a single hand to establish the spacing between the telescopic tubes automatically, the aforementioned benefits for the main Invention Patent, which can be summarized as follows:
- Integration of the blocking element in a ring integral with the outer tube.
- The blocking element assembly forming a manual operating handle for the spacer itself.
- Possibility of being able to manually and easily operate the sheet metal rings corresponding to the blocking element, such that by overcoming the spring connected to those rings, the blocking mechanism will be released.
- Possibility of increasing or decreasing the final distance with the simple gesture of rotating the assembly in one direction or in the other without rotating the supports.
- Possibility of applying pressure on the contact surface by a simple rotation of the spacer, without needing to rotate the supports.
- Possibility of releasing the spacer bey means of a simple rotation, in the direction opposite to the previous one, without needing to rotate the supports.
- Possibility of arranging a shock absorber at one end which, by freely rotating, allows approaching the measure.
- Possibility of arranging respective coplanar plates as a finishing of the spacer, which plates are susceptible to adopting angles for pivoting on shafts traversing the shock absorber and the threaded shaft, respectively, or not.
- Said plates are susceptible to having holes for being fixed to the surfaces or elements to be spaced.
- Possibility that said support plates have shock absorbing elements for preventing the sliding and that such elements are marked in the contact surfaces.
- Possibility of releasing the spacer simply and quickly by means of a strong and direct action on the rings forming the blocking element.
- It is a reusable, easy-to-handle and instinctive spacer.
- Possibility of interchanging the support plates for other applications, such as hooks so that the spacer works under pulling.
- Possibility that said spacer works under compression and under pulling.

### Description of the Drawings

To complement the description to be made below and for the purpose of aiding to better understand the features of the invention according to a preferred practical embodiment thereof, a set of drawings is attached as an integral part of said description in which the following has been depicted with an illustrative and non-limiting character:

Figure 1 shows a longitudinal section view of the spacer of the invention with the improvement consisting of the incorporation of an inner spring in the telescopic tubes forming the spacer itself, the spring acting in an expanded manner in this case.

Figure 2 shows a view like the preceding figure where the end support plates or elements have been replaced with simples hooks so that the spacer works under pulling, the inner spring hooked on the inner end of the rod corresponding to the upper end of the spacer being seen.

### Preferred Embodiment of the Invention

As can be seen in the mentioned figures, the spacer of the invention is formed by the telescopic coupling of two tubes (1 and 2), the first being an outer tube and the second an inner tube, with the particularity that both tubes (1 and 2) can be blocked by a blocking element formed by sheet metal rings (3), such that the spring (4) and the positioning of the sheet metal rings (3) inside the head (5) are such that said sheet metal rings (3) act by wedging, attempting to prevent the movement of the inner tube (2) with respect to the outer tube (1), i.e., blocking both tubes, whereas if that spring (4) is acted on, the inclined and wedging position of the sheet metal rings (3) is deblocked, allowing the movement of one tube with respect to the other.

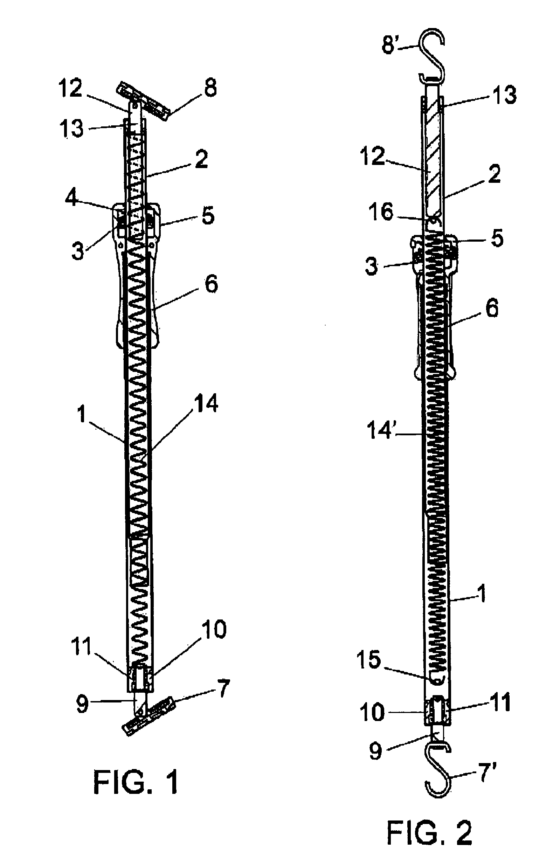

Respective support plates (7 and 8) have been provided at the ends, the first being the lower end and the second the upper end, as can be seen in Figure 1, although said support plates (7 and 8) can be replaced with respective hooks (7' and 8') so that the telescopic spacer, as depicted in Figure 2, works under pulling instead of under compression as depicted in Figure 1.

Both support plates (7 and 8) are pivotably assembled, the lower plate (7) being linked to a pin (9) with a flange which stops against the bottom of a slot made in a sleeve (14) provided at the lower end of the outer tube (1), between the mentioned flange and the bottom of the sleeve (10) there being a spring (11), as depicted in Figure 1.

In turn, the upper plate (8) is assembled, through a pin or shaft which, like in the previous case, allows the pivoting thereof, being assembled on a threaded rod (12) the threading of which is made on a sleeve (13) established at the upper end of the inner tube (2), as can also be seen in Figure 1.

Both plates (7 and 8) can be complemented with a protective and non-slip surface to prevent not only the sliding but also friction on the surfaces in which it is applied, which plates (7 and 8) in turn have through holes for fixing screws for fixing them to surfaces between which the spacer itself is applied.

The plates (7 and 8) are assembled such that they can have different inclinations, making the telescopic spacer more versatile for being able to space not only vertical levels but also inclined and even horizontal levels.

According to what is shown in Figure 1, the spacer is provided for distances under compression, whereas in Figure 2 the spacer is provided for establishing distances under pulling, in the second case of which the mentioned plates (7 and 8) are simply replaced with the hooks (7' and 8'), whereas the spring (4) of Figure 1 will be placed in an opposite manner so that the wedging of the sheet metal rings (3) is in the opposite direction, i.e., for preventing expansion movement or elongating movement of the spacer itself.

In the telescopically coupled tubes (1 and 2), a spring (14) is located between the lower end and the upper end, whereas that spring (14), instead of being between the lower end and upper end, as an expansion spring, is assembled as a compression spring (14') and is fixed at its ends at points (15 and 16) separated form the ends, in the first case close to the lower end of the outer tube (1), and in the second case under the end corresponding to the rod (L2), i.e., spaced further away from the upper end of the inner tube (2), as seen in Figure 2.

The spacer can be handled with a single hand for fixing the final measure completely automatically, by simply operating with that hand the blocking element formed by the sheet metal rings (3) with the spring (4), such that when that blocking element is no longer operated and the spacer is deblocked, the distance is automatically fixed at the suitable dimension.

## Claims

1. Improvements introduced in P 200901925 for a "Pressure-applying Telescopic Spacer", which is formed by two tubes (1 and 2) telescopically coupled to one another with a blocking element between both formed by sheet metal rings (3) associated with a spring (4) assembled in a head (5) of a long sleeve (6) fixed on the outer tube (1), the spring (4) of which acts on the rings (3) so the latter acquire a wedging position and blocking both tubes (1 and 2) with respect to one another, the ends of the tubes being complemented with respective support plates (7 and 8) either with hooks (7' and 8') for acting by compression or by pulling, **characterized in that** inside and axially to the tubes (1 and 2) telescopically coupled to one another, a spring (14 or 14') is arranged acting under expansion or under compression in order to retract or elongate the spacer itself automatically once the blocking established by the sheet metal rings (3) with the spring (4) has been released with a single hand,
